# EUROPÄISCHE PATENTSCHRIFT

(11) **EP 0 728 937 B1**
(45) Veröffentlichungstag und Bekanntmachung des Hinweises auf die Patenterteilung: **11.11.1998**
(21) Anmeldenummer: 96102418.9
(22) Anmeldetag: 17.02.1996
(51) Int. Cl.: F02M 37/10, B60K 15/077

(54) **Kraftstoff-Fördervorrichtung**
Fuel feeding device
Dispositif d'alimentation de carburant

(30) Priorität: 18.02.1995 DE 29502735 U; 13.07.1995 DE 29511305 U
(43) Veröffentlichungstag der Anmeldung: 28.08.1996
(73) Patentinhaber: Walter Alfmeier GmbH + Co Präzisions-Baugruppenelemente, D-91757 Treuchtlingen (DE); Bayerische Motoren Werke Aktiengesellschaft, 80788 München (DE)
(72) Erfinder: Sachs, Erwin, 91781 Weissenburg (DE); Vetter, Siegfried, 91757 Treuchtlingen (DE); Kroiss, Hugo, 82194 Gröbenzell (DE); Bigalke, Manfred, 85591 Vaterstetten (DE)
(74) Vertreter: Tergau, Enno, Dipl.-Ing.

(56) Entgegenhaltungen:
- EP-A- 0 230 526
- DE-A- 4 336 574
- FR-A- 2 391 935

## Beschreibung

In der Automobiltechnik ist es üblich, Kraftstoffpumpen innerhalb des Kraftstofftanks anzuordnen. Die Pumpen sind dabei in der Regel in einer Pumpenaufnahme gelagert, die unmittelbar an der Tankinnenwandung oder mittelbar an einer im Tankinnenraum vorhandenen Struktur, etwa an einem Kraftstoffstautopf befestigt ist.

Es tritt dabei das Problem auf, daß die Betriebsgeräusche der Kraftstoffpumpe und deren Vibrationen auf die Tankwandung übertragen und dort derart verstärkt werden, daß sie im Fahrgastraum hör- und spürbar sind. Kraftstoffpumpen bzw. Pumpenaufnahmen werden daher üblicherweise unter Zwischenschaltung von Dämpfungselementen im Kraftstofftank gelagert. Am Gehäuse der Kraftstoffpumpe bzw. an den Pumpenaufnahmen sind zu diesem Zweck Befestigungsvorrichtungen für Dämpfungselemente vorgesehen. Entsprechende Befestigungselemente sind an der Tankinnenwandung oder im Falle der Befestigung der Pumpenaufnahme in einem Stautopf an der Innenwandung des Stautopfes vorhanden. Um die Pumpenaufnahmen bzw. Pumpengehäuse für die Montage vorzubereiten. müssen erst in manuell aufwendiger Weise die Dämpfungselemente mit dem Pumpengehäuse bzw. der Pumpenaufnahme verbunden werden. Die so vorkonfektionierten Teile werden an entsprechenden Trägerstrukturen, beispielsweise dem Stautopf, befestigt, indem die Dämpfungselemente in dafür geeignete Befestigungsvorrichtungen eingesetzt werden. Aus EP 0 230 526 A3 ist eine Lagerung einer Kraftstoffpumpe in dem Kraftstoffvorratsbehälter eines Kraftfahrzeuges bekannt, bei der die Kraftstoffpumpe von einer ringförmigen Pumpenaufnahme gehalten ist. Die Pumpenaufnahme ist konzentrisch von einem Pumpenträger umgeben, der von der Wand eines Stautopfes gebildet ist. Zwischen der Pumpenaufnahme und dem Pumpenträger bzw. der Stautopfwand sind Stege aus elastischem Material vorgesehen, die sich in einer Richtung von der Pumpenaufnahme wegerstrecken, die mit einem Winkel von der Radialen abweicht. Nachteilig bei dieser Lagerung ist zunächst der erhöhte Montageaufwand der mit dem Anordnen der Dämpfungsstege zwischen Pumpenaufnahme und Stautopfwand verbunden ist. Nachteilig ist weiterhin, daß sich bei einer durch Kraftstoffaufnahme bewirkten Quellung der Dämpfungsstege die Pumpenaufnahme relativ zum Pumpenträger bzw. zur Stautopfwand dreht.

Davon ausgehend ist es die Aufgabe der Erfindung, eine Fördervorrichtung zum Fördern von Kraftstoff aus dem Tank eines Kraftfahrzeuges vorzuschlagen, bei der die genannten Nachteile umgangen sind. Diese Aufgabe wird durch eine Fördervorrichtung mit der Merkmalskombination des Anspruches 1 gelöst. Danach ist eine eine Kraftstoffpumpe haltende Pumpenaufnahme nach Art eines Ringes etwa konzentrisch von einem Pumpenträger umgeben, wobei die genannten Teile über einstückige Dämpfungsstege miteinander verbunden sind. Pumpenträger, Dämpfungsstege und Pumpenaufnahme bilden somit ein einstückiges Teil, vorzugsweise ein Spritzgußteil. Weiterhin sind die Dämpfungsstege so angeordnet, daß sich ihre Enden bzw. ihre Befestigungspunkte am Pumpenträger und an der Pumpenaufnahme radial gegenüberliegen und daß die Länge der Dämpfungsstege größer ist als der Radialabstand ihrer Befestigungspunkte. Vorteilhaft ist dabei, daß ein solcher Pumpenträger an die jeweiligen Raumerfordernisse und Befestigungsmöglichkeiten innerhalb des Kraftstofftanks angepaßt und vor allem leicht montiert werden kann. Ein in Form eines Ringes ausgebildeter Pumpenträger kann etwa sehr leicht innerhalb eines Stautopfes eines Kraftstoffbehälters montiert werden. Durch die erfindungsgemäße Ausgestaltung ist weiterhin die Kompensation des Anlauf- und Schaltdrehmoments der Kraftstoffpumpe verbessert. Im allgemeinen neigen Kunststoffe dazu, Kraftstoff aufzunehmen und dadurch zu qellen. Im Falle von geradlinig in Radialrichtung ausgerichteten Dämpfungsstegen wird eine solche Quellung unter Umständen zu einer Kompression der Dämpfungsstege und damit zu einer Verhärtung und Veränderung ihrer Dämpfungseigenschaften führen. Durch die vorgeschlagene Ausgestaltung kann eine quellungsbedingte Längung der Dämpfungsstege kompensiert werden. in dem sich diese beispielsweise quer zur Radialrichtung stärker krümmen als dies im ursprünglichen, nicht gequollenen Zustand der Fall ist. Da die Befestigungspunkte der Dämpfungsstege auf einer Radialen angeordnet sind, hat eine quellungsbedingte Krafteinleitung in die Befestigungspunkte keine Relativdrehung zwischen Pumpenaufnahme und Pumpenträger zur Folge. Eine sowohl Quellungsvorgänge als auch Anschalt- und Abschaltdrehmomente kompensierende Formgebung wird vorzugsweise dadurch erreicht, daß die Dämpfungsstege V-förmig ausgebildet sind, wobei die beiden V-Schenkel einen spitzen Winkel miteinander bilden und sich die Winkel allle in dieselbe Umfangsrichtung öffnen.

Bei einer bevorzugten Ausführung der Erfindung bestehen die Dämpfungsstege, der Pumpenträger und die Pumpenaufnahme aus dem gleichen Kunststoff. Dabei kann ein Kunststoff gewählt werden, der eine für die zuverlässige und dauerhafte Halterung von Kraftstoffpumpen geeignete Festigkeit und Beständigkeit aufweist. Die Dämpfungseigenschaft der Dämpfungsstege wird einfach durch eine entsprechende Formgebung, insbesondere durch die Querschnittsfläche, die Querschnittsform, die Länge und die Masse der Dämpfungsstege, bewirkt. Eine weitere Anpassung an die jeweiligen Dämpfungsaufgaben ist dadurch möglich, daß der Kunststoff im Bereich der Dämpfungsstege modifiziert ist. Durch Zusatz von Additiven, Füllstoffen, Weichmachern etc. oder durch Veränderung der Anteile der jeweiligen Kunststoffbestandteile bzw. -Inhaltsstoffe ist es möglich, die Elastizität und Flexibilität der Dämpfungsstege zu variieren. Es kann auch eine Veränderung der spezifischen Masse vorgenommen werden. Durch eine solche Masseveränderung kann die Eigenfrequenz der Dämpfungsstege gezielt den gegebenen Erfordernissen angepaßt werden. Als ein in der beschriebenen Art und Weise modifizierbarer Kunststoff kommt etwa POM (Polyoxymethylen) in Frage.

Die Dämpfungseigenschaften der Dämpfungsstege können aber auch variiert werden, indem für sie ein anderer Kunststoff gewählt wird als für die Pumpenaufnahme. Auf diese Weise kann den Anforderungen an die Pumpenaufnahme bzw. an den Pumpenträger bezüglich Halterung und Lagerung einer Kraftstoffpumpe ohne Rücksichtnahme auf die Dämpfungsfunktion der Dämpfungsstege entsprochen werden. Die Dämpfungsfunktion wird durch die Dämpfungsstege gewährleistet, die aus einem entsprechenden elastischen, flexiblen, vibrationsdämpfenden Material bestehen. Vorzugsweise werden Kunststoffe verwendet, die miteinander stoffschlüssig verbindbar sind. D.h., die Kunststoffe sind sich so ähnlich, daß etwa der an die Pumpenaufnahme angespritzte Kunststoff der Dämpfungsstege am Kunststoff der Pumpenaufnahme haftet. Auf diese Weise müssen in einem Formwerkzeug für ein in Rede stehendes Spritzgußteil keine Hinterschneidungen vorgesehen sein. Es reicht aus. wenn der Formhohlraum für die Dämpfungsstege etwa durch Schieber zunächst freigehalten wird. Das dann in den Formhohlraum für die Dämpfungsstege eingespritzte Material ist mit dem Material des Vorspritzlings so verwandt bzw. ähnlich, daß ein Anschmelzen und eine Verschweißung an der Nahtstelle zwischen Pumpenaufnahme und Dämpfungsstegen erfolgt. Es ist aber auch möglich, Kunststoffe zu verwenden. die nicht miteinander verschweißbar sind. In diesem Falle ist die Verbindung zwischen Dämpfungssteg und Pumpenaufnahme durch eine Formschlußverbindung bewirkt.

Die Erfindung wird nun anhand von in den beigefügten Zeichnungen dargestellten Ausführungsbeispielen näher erläutert. Es zeigen:
- Fig. 1: eine erfindungsgemäße Fördervorrichtung in Seitenansicht mit längsgeschnittener Pumpenaufnahme,
- Fig. 2: eine Ansicht der Vorrichtung nach Fig. 1 in Richtung des Pfeiles II,
- Fig. 3: eine weitere Ausführungsform einer erfindungsgemäßen Vorrichtung, bei welcher die Pumpenaufnahme innerhalb eines ringförmig ausgebildeten Pumpenträgers angeordnet ist,
- Fig. 4: einen Querschnitt eines Dämpfungssteges entlang der Linie IV-IV in Fig. 3,
- Fig. 5: das Detail V in Fig. 3,
- Fig. 6: eine Ausführungsform nach Fig. 3, bei der jedoch die Pumpenaufnahme zur Aufnahme weiterer Bauteile ausgebildet ist, und
- Fig. 7: eine teilweise geschnittene Seitenansicht der Vorrichtung nach Fig. 6, und
- Fig.8: ein Detail einer Vorrichtung nach Fig.3 mit einer modifizierten Form der Dämpfungsstege.

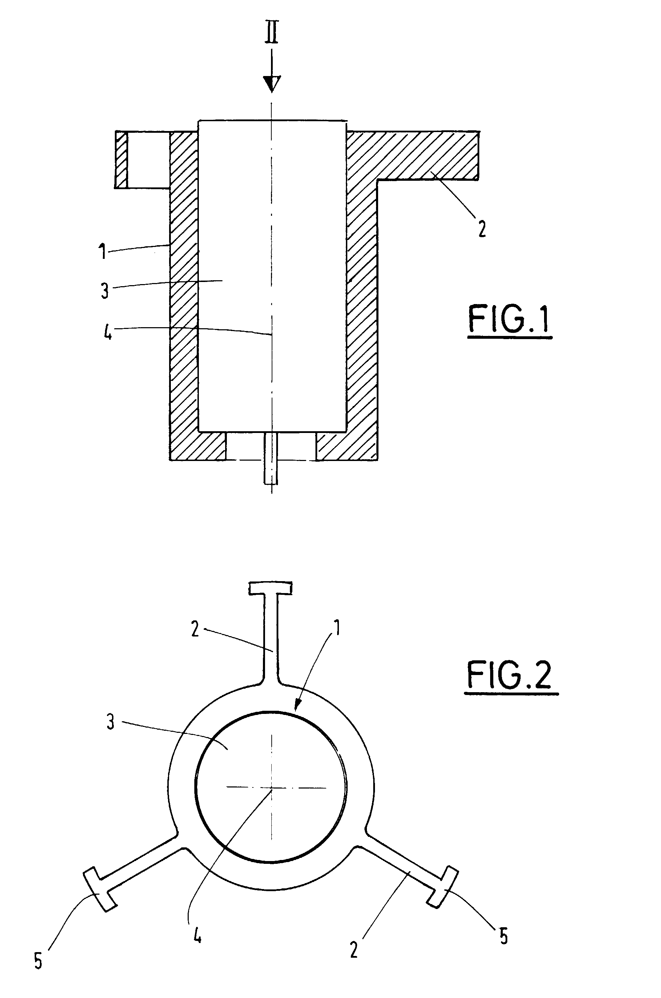

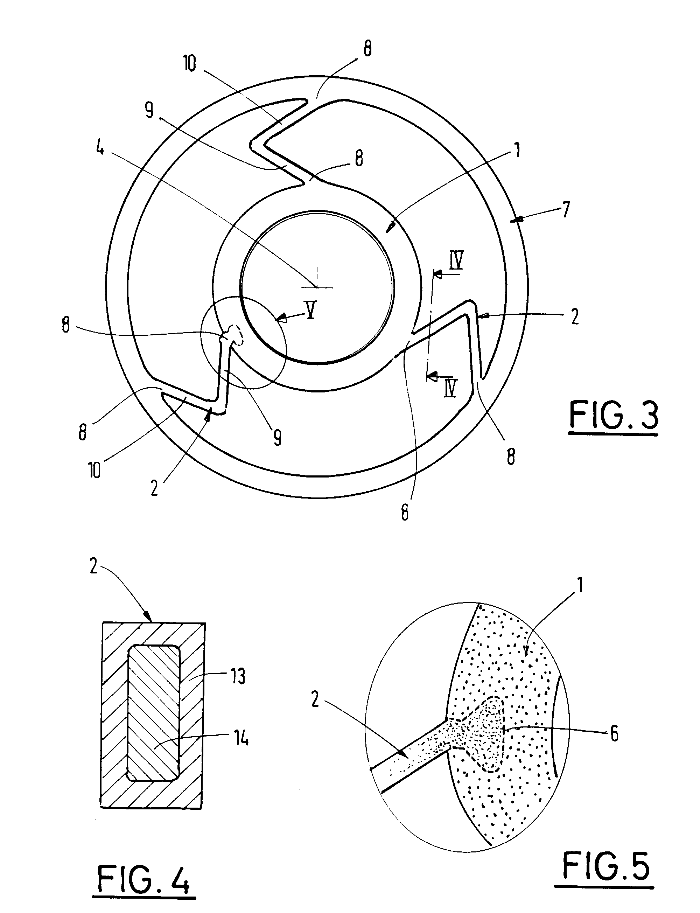

Fig. 1 zeigt eine erfindungsgemäße Vorrichtung, die im wesentlichen aus der Pumpenaufnahme 1 und daran einstückig angeformten Dämpfungsstegen 2 besteht. Die Pumpenaufnahme ist ein im wesentlichen hohlzylindrisches Teil, in dem eine Kraftstoffpumpe 3 formschlüssig einliegt. Sie kann auch durch das Pumpengehäuse selbst gebildet sein. Die Dämpfungsstege 2 erstrecken sich in Bezug auf die Mittellängsachse 4 der Kraftstoffpumpe 3 bzw. der Pumpenaufnahme 1 radial nach außen. An ihrem Freiende weisen die Dämpfungsstege 2 eine kopfartige Aufweitung 5 auf, mit der sie in einer komplementär ausgebildeten Befestigungsvorrichtung innerhalb des Kraftstofftanks, etwa innerhalb eines Stautopfes, befestigbar sind. Die Pumpenaufnahme 1 und die Dämpfungsstege 2 bestehen aus ein- und demselben Kunststoff, vorzugsweise aus POM. Dieser Kunststoff zeichnet sich durch hohe Kraftstoffresistenz sowie durch Festigkeit und Dauerhaftigkeit aus. Die Dämpfungseigenschaften der Dämpfungsstege werden durch eine relativ dünne und schlanke Ausgestaltung erreicht. Diese Ausgestaltung kann so weit gehen, daß die Dämpfungsstege nur noch die Dicke von Folien aufweisen. Die Dämpfungseigenschaft kann aber auch dadurch variiert bzw. den gegebenen Anforderungen angepaßt werden, daß der Kunststoff der Dämpfungsstege durch entsprechende Additive, Füllstoffe etc. bzw. durch Veränderungen der Konzentrationen der genannten Stoffe unterschiedlich elastisch und flexibel eingestellt ist. Als geeigneter Kunststoff bietet sich wiederum POM an. Zur Herstellung eines eine Pumpenaufnahme und Dämpfungsstege enthaltenden Spritzgußteiles wird dementsprechend eine Spritzgußform vorgesehen, bei der die den Dämpfungsstegen 2 entsprechenden Formhohlräume während eines ersten Spritzgußschrittes durch bewegliche Formkerne zunächst freigehalten sind. Der so erhaltene Vorspritzling wird dann vervollständigt, indem die Dämpfungsstege mit einem POM-Material mit größerer Elastizität und Flexibilität angespritzt werden. Für den genannten Zweck eignen sich auch Acetal-Copolymerisate auf der Basis von Trioxan, z.B. die von Höchst unter dem Warenzeichen Hostaform vertriebenen Kunststoffe (Hostaform N 2320 für die Pumpenaufnahme und Hostaform S 9064 für die Dämpfungsstege). Es ist auch möglich, für die Dämpfungsstege einen anderen Kunststoff als für die Pumpenaufnahme zu verwenden. Dabei gibt es prinzipiell zwei Möglichkeiten: Entweder es werden ähnliche Kunststoffe verwendet, die miteinander stoffschlüssig verbindbar sind. Ein solches Kunststoffpaar ist etwa PETP (Polyethylen-Terephthalat) und ein thermoplastisches Polyester-Elastomer, beispielsweise auf der Basis von Polyethylenterephthalat (Hytrel von Du Pont). Die prinzipiell andere Möglichkeit ist die, daß das eingesetzte Kunststoffpaar sich chemisch so unähnlich ist, daß eine stoffschlüssige Verbindung nicht möglich ist. Bei einer solchen Kunststoffpaarung, z.B. POM für die Pumpenaufnahme 1 und den Pumpenträger 7 und PA6 für die Dämpfungsstege müssen in dem Formwerkzeug entsprechende Hinterschneidungen vorgesehen werden. Eine solche Hinterschneidung zwischen zwei nicht miteinander verschweißbaren Kunststoffen ist schematisch in Fig. 5 dargestellt. Die gestrichelte Linie gibt die Grenze zwischen dem Kunststoff der Pumpenaufnahme und dem damit nicht verschweißbaren Kunststoff des Dämpfungssteges an.

Fig. 3 zeigt ein Ausführungsbeispiel, bei dem die Pumpenaufnahme 1 etwa zentral innerhalb nach Art eines Ringes ausgebildeten Pumpenträgers 7 angeordnet ist. Die Pumpenaufnahme 1 ist mit dem Pumpenträger über Dämpfungsstege 2 verbunden. Pumpenaufnahme 1, Dämpfungsstege 2 und Pumpenträger 7 bilden ein einstückiges Spritzgußteil. Die Befestigungspunkte 8 der Dämpfungsstege an der Pumpenaufnahme 1 einerseits und an dem Pumpenträger andererseits sind etwa so angeordnet, daß sie etwa auf der Radialen in Bezug auf die Mittellängsachse 4 liegen. Die Dämpfungsstege werden durch zwei V-förmig zusammengesetzte Schenkel 9,10 gebildet, wobei die Freienden der Schenkel 9,10 an den Befestigungspunkten 8 mit dem Pumpenträger 7 einerseits und der Pumpenaufnahme 1 andererseits verbunden sind. Die Schenkel 9,10 bilden jeweils einen in dieselbe Umfangsrichtung geöffneten spitzen Winkel. Durch diese Ausgestaltung der Dämpfungsstege 2 werden Anschalt- und Abschaltdrehmomente der Kraftstoffpumpe kompensiert. Außerdem wird dadurch, daß die Länge der Dämpfungsstege wesentlich größer ist, als dies dem Radialabstand zwischen dem jeweils einem Dämpfungssteg zugeordneten Befestigungspunkt entspricht, eine zusätzliche Dämpfungs- und Federungswirkung erreicht. Eine eventuelle Längung der Dämpfungsstege durch eine kraftstoffbedingte Quellung kann durch die V-förmige Ausgestaltung der Dämpfungsstege 2 ebenfalls kompensiert werden. Bei dem in Fig.8 dargestellten Ausführungsbeispiel ist der Schenkel 10 der Dämpfungsstege 2 an einer vom Pumpenträger 7 radial nach innen vorspringenden Befestigungswand 30 angeformt. Das mit der Pumpenaufnahme 1 verbundene Ende des Schenkels 9 der Dämpfungsstege 2 ist etwa rechtwinklig in Richtung auf die Pumpenaufnahme umgebogen. Auf diese Weise verlaufen die beiden Schenkel 9 und 10 in einem sehr spitzen Winkel, nahezu parallel zueinander.

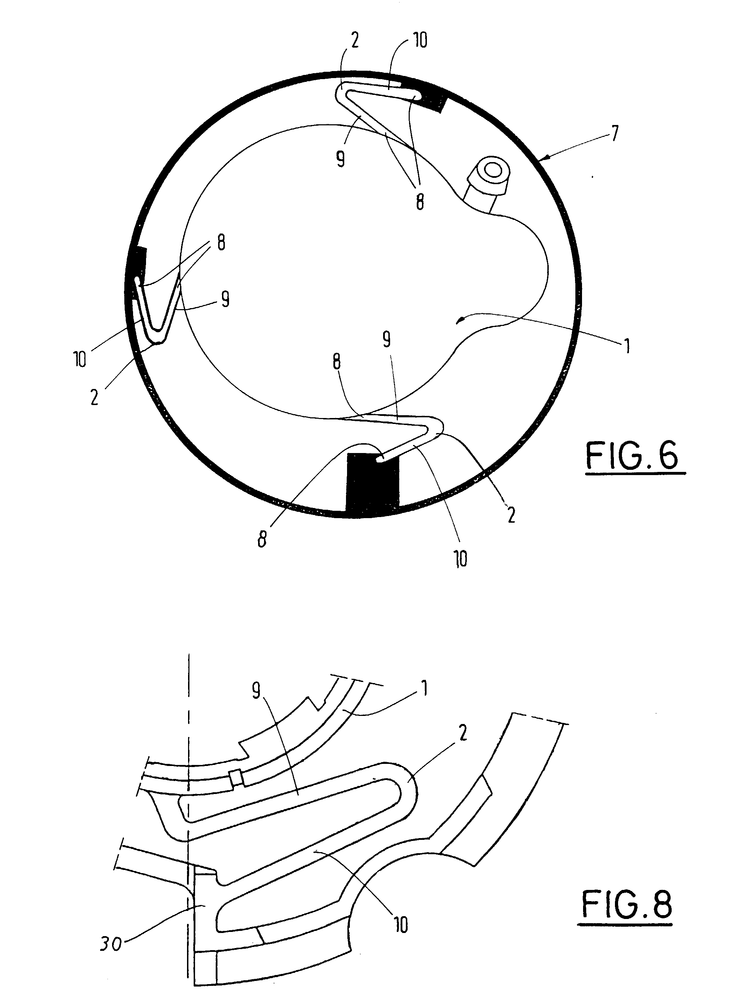

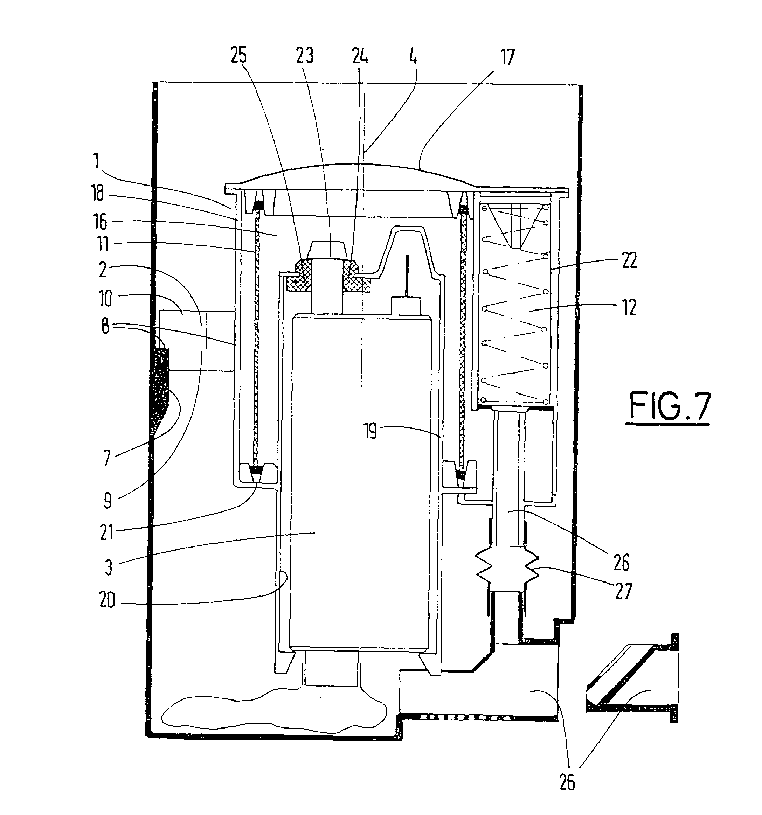

Vorteilhaft an der Ausführungsform gemäß Fig. 6 ist, daß der Pumpenträger nicht nur zur Aufnahme einer Kraftstoffpumpe 3, sondern auch zur Aufnahme weiterer Komponenten ausgebildet ist. Wie aus Fig. 7 hervorgeht, ist in der Pumpenaufnahme neben einer Kraftstoffpumpe auch ein Kraftstoffilter 11 und ein Druckregelventil 12 angeordnet. Der Vorteil dieser Ausgestaltung liegt zum einen in einer erheblichen Montagevereinfachung. Ein aus den genannten Bestandteilen bestehender Kraftstoffördereinsatz kann bereits vom Zulieferer vorkonfektioniert werden und muß bei der Produktion des Kraftfahrzeugs nur noch mit seinem Pumpenträger 7 beispielsweise in einen Stautopf eingesetzt werden. Wenn der Kraftstoffilter 11 und das Druckregelventil 12 separat am Kraftstoffbehälter befestigt werden, müssen sie über Schlauchleitungen mit der Kraftstoffpumpe verbunden sein. Dadurch besteht die Gefahr, daß Vibrationen oder Geräusche durch Festkörperoder Flüssigkeitsschalleitung von der Kraftstoffpumpe zu den genannten Komponenten bzw. dem Tank übertragen werden können. Sind dagegen die in Rede stehenden Bauteile zusammen mit der Pumpe in einem gemeinsamen Träger, nämlich der Pumpenaufnahme 1 angeordnet, so ist eine derartige Schall- und Vibrationsübertragung durch die Dämpfungsstege 2 ausgeschaltet.

Wie oben ausgeführt, können die Dämpfungsstege 2 aus demselben, eventuell modifizierten, oder einem anderen Kunststoff wie die Pumpenaufnahme 1 bestehen. Es kann aber vorteilhaft sein, die Dämpfungsstege 2 nicht nur aus einem sondern aus zwei verschiedenen Kunststoffen herzustellen, wobei der erste Kunststoff als Kernkomponente innerhalb des eine Hautkomponente bildenden zweiten Kunststoffes angeordnet ist. Zur Herstellung solcher Spritzgußteile wird ein sog. Mehrschicht-Spritzgießverfahren, das auch unter dem Begriff "Coinjektion" bekannt ist, angewandt. Bei diesem Verfahren werden die unterschiedlichen Kunststoffe über ein Düsenkopfsystem und über denselben Anguß in die Spritzgießform, d.h. in den Hohlraum für die Dämpfungsstege, eingespritzt. Die eine Außenhaut bildende Hautkomponente wird dabei zuerst eingespritzt und bildet in Folge von Wandhaftung und rascher Ausbildung einer erstarrten Randzone die genannte Hautkomponente. Die später nachströmende Komponente fließt im Innenbereich des Formteiles zwischen der wandhaftenden bzw. erstarrten Schicht der Hautkomponente und bildet einen Kern. Durch dieses Spritzverfahren ist es möglich, die Dämpfungseigenschaften der Dämpfungsstege exakt einzustellen und so eine nahezu vollständige Geräusch- und Vibrationsisolierung der Kraftstoffpumpe zu erreichen. Denkbar ist es, daß die Eigenfrequenz bzw. die Eigenschwingungseigenschaften der Dämpfungselemente durch eine Erhöhung ihrer Masse variiert werden. Dafür bietet sich insbesondere die Kernkomponente an. Die Hautkomponente kann dabei aus einem kraftstoffresistenten und ggf. mit dem Kunststoff der Pumpenaufnahme und ggf. des Pumpenträgers verschweißbaren Kunststoff bestehen. Für die Kernkomponente kann dagegen ein Kunststoff mit sehr hoher Masse, bedingt etwa durch einen sehr hohen Füllstoffanteil, gewählt werden. Dieser Kunststoff braucht keine Kraftstoffresistenz aufweisen und muß sich auch nicht zwingend mit dem Kunststoff der Pumpenaufnahme und des Pumpenträgers stoffschlüssig verbinden. Es ist auch denkbar, daß die eigentliche tragende und dämpfende Funktion der Dämpfungsstege allein durch die Kernkomponente übernommen wird. Die Hautkomponente dient in diesem Falle im wesentlichen als hermetische Abdichtung gegenüber dem Zutritt von Kraftstoff zur Kernkomponente. Auf diese Weise kann ein optimale Dämpfungseigenschaften aufweisender Kunststoff ausgewählt werden, der nicht zwangsläufig auch kraftstoffresistent zu sein braucht. Ein aus einer Hautkomponente 13 und einer Kernkomponente 14 bestehender Dämpfungssteg 2 ist in Fig. 4 im Querschnitt schematisch dargestellt. Wie daraus ersichtlich ist, ist die Kernkomponente hermetisch von dem Kunststoff der Hautkomponente gegenüber dem Zutritt von Kraftstoff abgedichtet. Solcher Art gestaltete Dämpfungsstege können auch mit dem sog. Gasinnendruckverfahren erhalten werden. Dabei wird der Dämpfungssteg als Hohlkörper gespritzt und später durch die offene Anspritzstelle mit einem zweiten Kunststoff gefüllt.

Im folgenden wird nun die Ausführungsform gem. Fig. 7 näher beschrieben: In der innerhalb eines Stautopfes 28 angeordneten Pumpenaufnahme 1 ist ein Druckraum 16 vorhanden, der mit der Druckseite der Kraftstoffpumpe 3 fluidisch verbunden ist. Der Druckraum 16 ist von einem Deckel 17, der die Oberseite der Pumpenaufnahme verschließt, einer Seitenwand 18, einer Innenwand 19 und einem Boden 21 umgrenzt. Die Innenwand 19 ist im Längsschnitt der Fig. 7 gesehen U-förmig ausgebildet und umgibt eine Ausnehmung 20. In dieser Ausnehmung 20 liegt die Kraftstoffpumpe 3 mit ihrem oberen Teil ein. Ein an der Oberseite der Kraftstoffpumpe abstehender Austrittstutzen 23 ragt durch eine Durchführung 24 in den Druckraum 16 hinein. Zwischen Austrittsstutzen 23 und dem Rand der Durchführung 24 ist eine Dichtung 25 angeordnet. In den Druckraum 16 ist der nach Art einer Filterhülse ausgebildete Kraftstoffilter 11 eingesetzt, wobei die Filterhülse die U-förmig in den Druckraum 16 vorgewölbte Innenwand 19 umgibt. Die beiden Stirnseiten des Kraftstoffilters 11 sind mit dem Boden 21 einerseits und dem Deckel 17 andererseits dichtend verbunden. Außerhalb des Kraftstoffilters 11 ist das Druckregelventil 12 angeordnet. Es setzt sich im wesentlichen zusammen aus einem zylinderförmigen Gehäuse 22, das sich in Richtung der Mittellängsachse 4 erstreckt. Das Gehäuse 22 ist oberseits durch den Deckel 17 verschlossen. Aus seiner Unterseite ragt ein Rücklaufstutzen 26 hervor, der durch den Boden 21 der Pumpenaufnahme 1 hindurchgeführt ist. Der Rücklaufstutzen 26 ist mit seinem Freiende über einen flexiblen Schlauch 27 mit einer am Boden des Stautopfes 28 angeordneten Saugstrahlpumpe 29 verbunden. Durch die Ausgestaltung des Schlauches 27 nach Art eines Faltenbalges ist die Übertragung von Vibrationen auf den Stautopf 28 bzw. den Tank verhindert.

### Bezugszeichenliste

- 1: Pumpenaufnahme
- 2: Dämpfungssteg
- 3: Kraftstoffpumpe
- 4: Mittellängsachse
- 5: Aufweitung
- 6: gestrichelte Linie
- 7: Pumpenträger
- 8: Befestigungspunkt
- 9: Schenkel
- 10: Schenkel
- 11: Kraftstoffilter
- 12: Druckregelventil
- 13: Hautkomponente
- 14: Kernkomponente
- 16: Druckraum
- 17: Deckel
- 18: Seitenwand
- 19: Innenwand
- 20: Ausnehmung
- 21: Boden
- 22: Gehäuse
- 23: Austrittsstutzen
- 24: Durchführung
- 25: Dichtung
- 26: Rücklaufstutzen
- 27: Schlauch
- 28: Stautopf
- 29: Saugstrahlpumpe
- 30: Befestigungswand

## Patentansprüche

1. Fördervorrichtung zum Fördern von Kraftstoff aus dem Tank eines Kraftfahrzeuges mit einer eine Kraftstoffpumpe (3) haltenden und innerhalb des Tanks angeordneten Pumpenaufnahme (1), die über Dämpfungsstege (2) einstückig mit einem mittel- oder unmittelbar am Tank befestigbaren, die Pumpenaufnahme (1) nach Art eines Ringes etwa konzentrisch umgebenden Pumpenträger (7) verbunden ist, wobei die Länge der Dämpfungsstege (2) größer ist als der Radialabstand ihrer Befestigungspunkte (8)
dadurch gekennzeichnet, daß sich die Befestigungspunkte (8) eines Dämpfungssteges am Pumpenträger (7) und an der Pumpenaufnahme (1) etwa radial gegenüberliegen und daß Pumpenträger (7), Dämpfungsstege (2) und Pumpenautnahme (1) ein einstückiges Teil bilden.

2. Vorrichtung nach der Anspruch 1,
dadurch gekennzeichnet, daß die Dämpfungsstege (2) in einer gemeinsamen Radialebene angeordnet sind.

3. Vorrichtung nach Anspruch 1 oder 2,
dadurch gekennzeichnet, daß die Dämpfungsstege (2) aus zwei V-förmig miteinander verbundenen und einen jeweils zu derselben Umfangsrichtung hin geöffneten spitzen Winkel einschließenden Schenkeln (9,10) gebildet sind.

4. Vorrichtung nach einem der Ansprüche 1 bis 3,
dadurch gekennzeichnet, daß die Pumpenaufnahme zur Aufnahme weiterer Komponenten, etwa eines Kraftstoffilters und eines Druckregelventils ausgebildet ist.

5. Vorrichtung nach einem der Ansprüche 1 bis 4,
dadurch gekennzeichnet, daß der Pumpenträger (7), die Dämpfungsstege (2) und die Pumpenaufnahme (1) aus demselben Kunststoff bestehen und daß der Kunststoff im Bereich der Dämpfungsstege (2) in einer deren Dämpfungseigenschaften beeinflussenden Weise modifiziert ist.

6. Vorrichtung nach einem der Ansprüche 1 bis 4,
dadurch gekennzeichnet, daß die Dämpfungsstege (2) aus einem anderen Kunststoff bestehen als die Pumpenaufnahme (1) und der Pumpenträger (7).

7. Vorrichtung nach Anspruch 6,
dadurch gekennzeichnet, daß der Kunststoff der Dämpfungsstege (2) und der Kunststoff der Pumpenaufnahme (1) und des Pumpenträgers (7) stoffschlüssig miteinander verbindbar sind.

8. Vorrichtung nach Anspruch 6,
gekennzeichnet durch eine mittels eines Spritzgußverfahrens hergestellte Formschlußverbindung zwischen dem Kunststoff der Dämpfungsstege (2) und dem, Kunststoff der Pumpenaufnahme (1) und des Pumpenträgers (7).

9. Vorrichtung nach einem der Ansprüche 1 bis 4 und 6 bis 8,
dadurch gekennzeichnet. daß die Dämpfungsstege (2) aus einem ersten und einem zweiten Kunststoff bestehen, wobei der erste Kunststoff als Kernkomponente innerhalb des die Hautkomponente bildenden zweiten Kunststoffs angeordnet ist.

## Claims

1. Device for feeding fuel from the tank of a motor vehicle having a pump receptacle (1) which holds a fuel pump (3), is arranged inside the tank and is connected in one piece via damping webs (2) to a pump carrier (7) which can be attached indirectly or directly to the tank and which surrounds the pump receptacle (1) approximately concentrically in the manner of a ring, the length of the damping webs (2) being greater than the radial distance between their attachment points (8), characterized in that the attachment points (8) of a damping web to the pump carrier (7) and to the pump receptacle (1) lie approximately radially opposite one another, and in that pump carrier (7), damping webs (2) and pump receptacle (1) form a one-piece part.

2. Device according to Claim 1, characterized in that the damping webs (2) are arranged in a common radial plane.

3. Device according to Claim 1 or 2, characterized in that the damping webs (2) are formed from two limbs (9, 10) which are connected to one another in a V shape and enclose an acute angle which is open in each case in the same circumferential direction.

4. Device according to one of Claims 1 to 3, characterized in that the pump receptacle is designed to receive further components, for example a fuel filter and a pressure regulating valve.

5. Device according to one of Claims 1 to 4, characterized in that the pump carrier (7), the damping webs (2) and the pump receptacle (1) are composed of the same plastic, and in that the plastic is modified in the region of the damping webs (2) in a manner which influences their damping properties.

6. Device according to one of Claims 1 to 4, characterized in that the damping webs (2) are composed of a different plastic from the pump receptacle (1) and the pump carrier (7).

7. Device according to Claim 6, characterized in that the plastic of the damping webs (2) and the plastic of the pump receptacle (1) and of the pump carrier (7) can be connected to one another in a materially joined fashion.

8. Device according to Claim 6, characterized by a positively locking connection, produced by means of an injection moulding method, between the plastic of the damping webs (2) and the plastic of the pump receptacle (1) and of the pump carrier (7).

9. Device according to one of Claims 1 to 4 and 6 to 8, characterized in that the damping webs (2) are composed of a first and a second plastic, the first plastic being arranged as a core component within the second plastic forming the skin component.

## Revendications

1. Dispositif d'alimentation destiné à alimenter du carburant provenant du réservoir d'un véhicule automobile, qui comprend un logement de pompe (1) contenant une pompe à carburant (3) et agencé à l'intérieur du réservoir, ledit logement étant relié, par intermédiaire de barrettes d'amortissement (2) d'une seule pièce, à un porte-pompe (7) susceptible d'être fixé directement ou indirectement sur le réservoir et qui entoure le logement de pompe (1) approximativement concentriquement à la manière d'une bague, dans lequel la longueur des barrettes d'amortissement (2) est supérieure à la distance radiale de leurs points de fixation (8),
caractérisé en ce que
les points de fixation (8) de l'une des barrettes d'amortissement sur le porte-pompe (7) et sur le logement de pompe (1) sont approximativement opposés dans le sens radial, et en ce que le porte-pompe (7), les barrettes d'amortissement (2) et le logement de pompe (1) forment une partie d'une seule pièce.

2. Dispositif selon la revendication 1,
caractérisé en ce que
les barrettes d'amortissement (2) sont agencées dans un plan radial commun.

3. Dispositif selon l'une ou l'autre des revendications 1 et 2,
caractérisé en ce que
les barrettes d'amortissement (2) sont réalisées par deux bras (9, 10) reliés l'un à l'autre en forme de V, et enfermant un angle aigu respectivement ouvert dans la même direction périphérique.

4. Dispositif selon l'une des revendications 1 à 3,
caractérisé en ce que
le logement de pompe est réalisé afin de recevoir d'autres composants, comme par exemple un filtre à carburant et une soupape de régulation de pression.

5. Dispositif selon l'une des revendications 1 à 4,
caractérisé en ce que
le porte-pompe (7), les barrettes d'amortissement (2) et le logement de pompe (1) sont constitués de la même matière plastique, et en ce que cette matière plastique est modifiée d'un manière qui influence ses propriétés d'amortissement dans la région des barrettes d'amortissement (2).

6. Dispositif selon l'une des revendications 1 à 4,
caractérisé en ce que
les barrettes d'amortissement (2) sont réalisées en une autre matière plastique que le logement de pompe (1) et le porte-pompe (7).

7. Dispositif selon la revendication 6,
caractérisé en ce que
la matière plastique des barrettes d'amortissement (2) et la matière plastique du logement de pompe (1) et du porte-pompe (7) sont susceptibles d'être reliées conjointement au sein du matériau.

8. Dispositif selon la revendication 6,
caractérisé par
une liaison à coopération de formes, établie par un procédé d'injection sous pression, entre la matière plastique des barrettes d'amortissement (2) et la matière plastique du logement de pompe (1) et du porte-pompe. (7).

9. Dispositif selon l'une des revendications 1 à 4 et 6 à 8,
caractérisé en ce que
les barrettes d'amortissement (2) sont constituées d'une première et d'une seconde matière plastique, dans lesquelles la première matière plastique est agencée sous la forme d'un composant d'âme à l'intérieur de la seconde matière plastique qui forme les composantes de peau.
